# EUROPEAN PATENT APPLICATION

(11) **EP 3 035 615 A1**
(43) Date of publication of application: **22.06.2016**
(21) Application number: 14290393.9
(22) Date of filing: 17.12.2014
(51) Int. Cl.: H04L 12/801, H04L 12/841, H04L 12/823, H04L 12/875

(54) **Method for queue management**

(71) Applicant: ALCATEL LUCENT, 92100 Boulogne-Billancourt (FR)
(72) Inventor: Lautenschläger, Wolfram, 70435 Stuttgart (DE)
(74) Representative: Louis Pöhlau Lohrentz

(57) **Abstract**

The invention concerns a method for queue management, wherein the method comprises the steps of transmitting (9) a packet (4a) being a first packet (4) of a queue (2) at a head of the queue (2) stored in a buffer (1) at dequeuing (8), if a link capacity of a transmission link (11) is sufficient to transmit (9) the packet (4a) and/or dropping (10) a packet (4a) being a first packet (4) of the queue (2) at the head of the queue (2) at dequeuing (8), if a queue delay exceeds a first queue delay threshold. The inventions concerns further a network element (14) comprising at least one control unit (15) adapted to implement the method.

## Description

### Field of the invention

The invention is situated in the field of communication networks and relates to a method for managing a packet queue in a communication network.

### Background

In communication networks packet buffers are used to store incoming packets in front of a transmission link of limited capacity (bandwidth). In case of an abrupt reduction in transmission capacity, which occurs frequently on radio mobile links, the queue delay, which is in short the delay of packets staying in the buffer without being transmitted, rises excessively. This excess of queue delay is further augmented by packets that are delayed, but nevertheless transmitted. However these packets are not expected anymore by the receivers which therefore request retransmission of these packets. The retransmission of these packets wastes transmission capacity and even more enhances the excessive queue delay, so that following packets are unnecessarily delayed.

### Summary

The invention has the objective to improve the management of a packet queue, in particular in case of an excessive queue delay.

The objective of the invention is achieved by a method for queue management. The method comprises the steps of transmitting a packet being a first packet of a queue at a head of the queue stored in a buffer at dequeuing, if a link capacity of a transmission link is sufficient to transmit the packet, and/or dropping a packet being a first packet of the queue at the head of the queue at dequeuing, if a queue delay exceeds a first queue delay threshold.

The objective of the invention is further achieved by a network element of a communication network. The network element comprises at least one control unit. The at least one control unit is adapted to transmit a packet being a first packet of a queue at a head of the queue stored in a buffer at dequeuing, if a link capacity of a transmission link is sufficient to transmit the packet, and/or to drop a packet being a first packet of the queue at the head of the queue at dequeuing, if a queue delay exceeds a first queue delay threshold.

The objective of the invention is further achieved by a software product, which, when executed by a computer, is adapted to execute the method of queue management.

Further features and advantages are achieved by preferred embodiments. Preferably, features of preferred embodiments are combinable resulting in further preferred embodiments.

In a preferred embodiment, the queue delay is defined as the delay of the packet being the first packet at the head of the queue. In a preferred embodiment, the queue delay is determined by calculating at dequeuing of the packet the time period between enqueuing of said packet and dequeuing of said packet. In a preferred embodiment, calculating the time period between enqueuing of said packet and dequeuing of said packet comprises providing a timestamp on said packet at enqueuing said packet and determining the difference between (a time indicated by) the timestamp and a time at dequeuing said packet.

Preferably, a buffer comprises memory cells where or in which the packets are stored. Preferably, the feature "a reference indicating a packet" means that the reference addresses a memory cell where a packet is stored. Therefore, the feature "a reference indicating a packet" comprises "a reference indicating a packet, wherein the reference addresses a memory cell where the packet is stored". Thus, preferably "incrementing the reference indicating a packet" means incrementing the address of a memory cell, which (namely the address) is included in the reference so that the reference points to a next memory cell of the buffer.

In a preferred embodiment, the method comprises the steps of transmitting a packet being a first packet of a queue at a head of the queue stored in a buffer at dequeuing, if a link capacity of a transmission link is sufficient to transmit the packet and dropping the packet being the first packet of the queue at the head of the queue at dequeuing, if a queue delay exceeds a first queue delay threshold.

In a preferred embodiment, dropping a packet being a first packet of a queue at a head of a queue at dequeueing comprises removing the packet from the queue, in particular by incrementing a reference indicating the memory cell in which the packet is stored, and transmitting the packet over the transmission link, e.g. to a receiver of the packet.

In a preferred embodiment, the method comprises the steps of transmitting a packet being a first packet of a queue at a head of the queue stored in a buffer at dequeuing, if a link capacity of a transmission link is sufficient to transmit the packet or dropping the packet being the first packet of the queue at the head of the queue at dequeuing, if a queue delay exceeds a first queue delay threshold.

In a preferred embodiment, dropping a packet being a first packet of a queue at a head of a queue at dequeuing comprises incrementing a reference indicating the packet and not further processing the packet, in particular not transmitting the packet.

In a preferred embodiment, dropping a packet being a first packet of a queue at a head of a queue at dequeuing comprises removing the packet from the queue, in particular by incrementing reference of the memory cell in which the packet is stored, without transmitting the packet over a transmission link. In other words, in a preferred embodiment, dropping a packet being a first packet of a queue at a head of a queue at dequeuing comprises removing the packet from the queue, in particular by incrementing the reference indicating (or addressing) the memory cell in which the packet is stored, and refraining from transmitting the packet over the transmission link.

In other words, in a preferred embodiment, dropping a packet being a first packet of a queue at a head of a queue at dequeuing comprises incrementing a reference indicating (or addressing) a memory cell in which the packet is stored, and in particular refraining from transmitting the packet over the transmission link.

In a preferred embodiment, a prior processing of one step out of the steps of transmitting and dropping the packet being the first packet of a queue at a head of the queue prevents a simultaneous processing of the respective other step of the steps of transmitting and dropping the packet being the first packet of the queue at a head of the queue.

In a preferred embodiment, a prior processing of transmitting or dropping the packet being the first packet of a queue at a head of the queue prevents a simultaneous processing of the respective other step of the steps of transmitting and dropping the packet being the first packet of the queue at a head of the queue.

In a preferred embodiment, a prior processing of transmitting or dropping the packet being the first packet of a queue at a head of the queue prevents a simultaneous processing of dropping or transmitting the packet being the first packet of the queue at a head of the queue, respectively.

In a preferred embodiment, prior transmitting or prior dropping the packet being the first packet of a queue at a head of the queue prevents a simultaneous processing of dropping or transmitting said packet, respectively.

In a preferred embodiment, a prior processing of transmitting or dropping the packet being the first packet of a queue at a head of the queue prevents an additional processing of dropping or transmitting said packet, respectively.

In a preferred embodiment, a prior processing of transmitting or dropping the packet being the first packet of a queue at a head of the queue prevents a contemporaneous processing of dropping or transmitting the packet, respectively.

In a preferred embodiment, transmitting the packet being the first packet of a queue at a head of the queue prior to dropping said packet prevents dropping said packet.

In a preferred embodiment, dropping the packet being the first packet of a queue at a head of the queue prior to transmitting the packet prevents transmitting said packet.

In a preferred embodiment, the steps of transmitting the packet and/or dropping the packet being the first packet of the queue at the head of the queue are executed by concurrent processes, wherein, preferably, a reference of the memory cell, in which a packet is stored, is shared as a common resource.

In a preferred embodiment, the reference of the memory cell is an address of the memory cell.

In a preferred embodiment, the reference of the memory cell is a pointer indicating (or addressing) the memory cell, which is preferably termed read pointer.

In a preferred embodiment, the reference of the memory cell is a vector indicating or addressing the memory cell.

In a preferred embodiment, the reference of the memory cell is a counter number or a counter, which is preferably termed read counter.

In a preferred embodiment, the concurrent processes execute, before the steps of transmitting and/or dropping the packet being the first packet of a queue at a head of the queue, the step of making a copy of the reference of the memory cell, in which the packet being the first packet of the queue at the head of the queue, is stored.

In a preferred embodiment, the concurrent processes execute, before the steps of transmitting and/or dropping the packet being the first packet of a queue at a head of the queue, the step of reading at least the head of the packet stored in the memory cell indicated by the copy of the reference.

In a preferred embodiment, the method comprises the step of determining the queue delay.

In a preferred embodiment, the queue delay is determined by one or more of the one or more, preferably concurrent, processes.

The queue delay is determined preferably by the process which executes the step of transmitting a packet being a first packet of a queue at the head of the queue, preferably by the process which executes the step of dropping a packet being a first packet of a queue at the head of the queue, and further preferably by a process which executes the step of dropping a packet arriving at the buffer for enqueuing at the tail of the queue, as will be described in more detail below.

In preferred embodiments, the queue delay is determined based on the read packet or read head of the packet.

In particular, the head of the packet is read, because based on a timestamp included in the head of the packet, a queue delay is calculated in preferred embodiments. Alternatively, the whole content of the packet is read.

In a preferred embodiment, based on the read packet head or read packet, preferably, it is determined on which transmission link, and/or to which receiver of the packet, the packet should be transmitted, in case the link capacity is sufficient.

Preferably, a timestamp is a number which is assigned to a packet arriving at the buffer at enqueuing. Preferably, a timestamp is a number which is assigned to a packet at the moment of enqueuing, this means when putting the arriving packet in the queue. Preferably, the timestamp is a number which rises linearly by the time at which the packet arrives at the buffer. Preferably, the timestamps of packets which are put in the queue packet after packet rise linearly by time from packet to packet, respectively.

In a preferred embodiment, the concurrent process which executes the step of transmitting the packet being the first packet of the queue at the head of the queue and stored in the memory cell indicated by the copy of the reference, executes the step of testing, if (whether) the copy of the reference is still identical to the reference, and preferably further the step of incrementing the reference of the memory cell, if (in case) the copy of the reference is still identical to the reference.

In a preferred embodiment, the concurrent process which executes the step of transmitting the packet being the first packet of the queue at the head of the queue and stored in the memory cell indicated by the copy of the reference, executes the step of testing, if the copy of the reference is still identical to the reference, and preferably further the step of incrementing the reference of the memory cell, if the copy of the reference is still identical to the reference, in particular before, during and/or after the step of transmitting the packet being the first packet at the head of the queue.

In a preferred embodiment, the testing and, preferably the incrementing step, are executed before, during and/or after the transmitting step. Preferably, the transmitting step is executed before, during and/or after the testing and, preferably, incrementing, step(s).

In particular, in a preferred embodiment, the concurrent process, which executes the step of transmitting, makes a copy of the reference indicating the memory cell in which the packet being the first packet at the head of the queue is stored. Preferably, the process reads at least the head of the first packet. The process implements (= executes/ processes) the testing, and preferably incrementing, step(s), wherein in particular the step of testing, and preferably the step of incrementing, are processed as atomic operation, as will be described in detail below. In a preferred embodiment, the process implements (= executes/ processes) the testing and incrementing steps, wherein the step of testing and the step of incrementing are processed as atomic operation, as will be described in detail below. In particular, after or during the, preferably atomic, processing of the testing, and preferably incrementing, step(s), the transmitting step is processed, this means is started and might still be in process, after the processing of the testing, and preferably incrementing, step(s) have already been completed. This is in particular due to the atomic processing of the testing, and preferably incrementing, step(s), which means that the testing, and preferably incrementing, step(s) are processed almost instantaneously. Therefore, the testing, and preferably incrementing, step(s) are already completed, while the transmitting step is still in process. In particular, the process has the copy of the reference addressing the memory cell, in which the first packet is stored, and can still access and process the first packet by means of the copy of the reference to the memory cell, in which the first packet is stored, even if the reference has been already incremented by the process by means of the incrementing step. In other words, in this preferred embodiment, in short, the process tests, and preferably increments, the reference atomically (instantaneously), and transmits the first packet contemporaneously which is accessed by the copy of the reference, wherein the transmitting step usually continues (e.g. for one microsecond to 10 milliseconds depending on the transmission bit rate of the transmission link) after the testing, and preferably incrementing, step(s) have been already completed.

In a preferred embodiment, the concurrent process which executes the step of dropping the packet being the first packet of the queue at the head of the queue and stored in the memory cell indicated by the copy of the reference, executes the step of testing, if (whether) the copy of the reference is still identical to the reference, and preferably further the step of incrementing the reference of the memory cell, if (in case) the copy of the reference is still identical to the reference.

In a preferred embodiment, the concurrent process which executes the step of dropping the packet being the first packet of the queue at the head of the queue and stored in the memory cell indicated by the copy of the reference, executes the step of testing, if the copy of the reference is still identical to the reference, and preferably further the step of incrementing the reference of the memory cell, if the copy of the reference is still identical to the reference and thereby (i.e. by incrementing the reference) dropping the packet being the first packet of the queue at the head of the queue and stored in the memory cell indicated by the copy of the reference.

In a preferred embodiment, the concurrent process which executes the step of dropping the packet being the first packet of the queue at the head of the queue and stored in the memory cell indicated by the copy of the reference, executes the step of testing, if the copy of the reference is still identical to the reference, and preferably further the step of dropping the packet being the first packet of the queue at the head of the queue and stored in the memory cell indicated by the copy of the reference by incrementing the reference of the memory cell, if the copy of the reference is still identical to the reference.

In a preferred embodiment, the step of dropping the packet being the first packet of the queue at the head of the queue and stored in the memory cell indicated by the copy of the reference of the concurrent process which executes the step of dropping the packet being the first packet of the queue at the head of the queue and stored in the memory cell indicated by the copy of the reference, is executed by incrementing the reference of the memory cell, if the copy of the reference is still identical to the reference. In a preferred embodiment, before the step of incrementing the reference, if the copy of the reference is still identical to the reference, a (extra/ separate) step of testing, if the copy of the reference is still identical to the reference, is executed.

In preferred embodiments, the step of making a copy of the reference, the step of reading (at least the head of the packet being the first packet at the head of the queue), the step of testing and/or the step of incrementing the reference are implemented as atomic operations.

In a preferred embodiment, the step of making a copy of the reference and/or the step of testing and the step of incrementing the reference are implemented as atomic operations.

In a preferred embodiment, the step of making a copy of the reference and/or the step of testing and the step of incrementing the reference are implemented as atomic operation.

In a preferred embodiment, the step of making a copy of the reference and the step of testing and the step of incrementing the reference are implemented as atomic operation.

In a preferred embodiment, the step of making a copy of the reference is implemented as atomic operation.

In a preferred embodiment, the step of testing and/or the step of incrementing the reference are implemented as atomic operation.

In a preferred embodiment, the step of testing and the step of incrementing the reference are implemented as atomic operation.

In a preferred embodiment, the step of testing and the step of incrementing the reference are implemented as an atomic operation.

In a preferred embodiment, the step of testing and the step of incrementing the reference are implemented as one atomic operation.

In a preferred embodiment, the step of testing and the step of incrementing the reference are implemented as a single atomic operation.

In a preferred embodiment, the steps of testing and incrementing are implemented as atomic operation.

In a preferred embodiment, the step of testing, if the copy of the reference is still identical to the reference, and the step of incrementing the reference, if the copy of the reference is still identical to the reference, are implemented as atomic operation.

In a preferred embodiment, the step of testing, if the copy of the reference is still identical to the reference, is implemented as atomic operation.

In a preferred embodiment, the step of incrementing the reference, if the copy of the reference is still identical to the reference, is implemented as atomic operation.

In a preferred embodiment, the step of incrementing the reference is implemented as an atomic increment.

In a preferred embodiment, the steps of making a copy of the reference, of reading at least the head of the packet stored in the memory cell indicated by the copy of the reference, (preferably of determining the queue delay,) of testing, if the copy of the reference is still identical to the reference, and of incrementing the reference, if the copy of the reference is still identical to the reference, are implemented as atomic operations.

In a preferred embodiment, the steps of making a copy of the reference, of reading at least the head of the packet stored in the memory cell indicated by the copy of the reference, (preferably of determining the queue delay,) of testing, if the copy of the reference is still identical to the reference, and of incrementing the reference, if the copy of the reference is still identical to the reference, are implemented as atomic operation.

Preferably, an atomic operation is implemented within only a few machine cycles, in particular within 5 - 10 machine cycles. In a preferred embodiment, a set of atomic operations appears to be implemented instantaneously and is not interrupted by further concurrent processes or concurrent operations.

Atomic operations are in particular operations that cannot be subdivided into partial operations that can be distinguished by other concurrent processes. In other words, atomic operations are in particular operations, that cannot be subdivided into partial operations distinguishable by other concurrent processes. Atomic operations are typically executed in one or few clock cycles, in particular in 5, 10 or 20 clock cycles.

In a preferred embodiment, the buffer is implemented as a ring buffer. In a preferred embodiment, the queue is implemented as a linked list.

In a preferred embodiment, a first process performing the step of transmitting the packet being the first packet of the queue at the head of the queue executes the steps of determining that a link capacity of the transmission link is sufficient to transmit the packet, copying a reference of a memory cell, in which the packet being the first packet of the queue at the head of the queue is stored, reading at least a head of the packet being the first packet of the queue at the head of the queue and stored in the memory cell indicated by the copy of the reference, transmitting the packet stored in the memory cell indicated by the copy of the reference over the transmission link, testing, if the copy of the reference is still identical to the reference, and, if the copy of the reference is still identical to the reference, incrementing the reference.

In a preferred embodiment, a second process performing the step of dropping the packet being the first packet of the queue at the head of the queue executes the steps of copying a reference of a memory cell, in which the packet being the first packet of the queue at a head of the queue is stored, reading at least the head of the packet being the first packet of the queue at the head of the queue and stored in the memory cell indicated by the copy of the reference, determining that the queue delay of the packet being the first packet of the queue at the head of the queue exceeds the first queue delay threshold, testing, if the copy of the reference is still identical to the reference, and, if the copy of the reference is still identical to the reference, dropping the packet by incrementing the reference, and in particular not further processing the packet, in particular not transmitting the packet.

In preferred embodiments, one or more of the steps of the described method, in particular one or more of the steps of the first process performing the step of transmitting the packet being the first packet of the queue at the head of the queue and/or of the second process performing the step of dropping the packet being the first packet of the queue at the head of the queue, are executed in different order and/or are omitted. In particular, in regard of the step of transmitting the packet being the first packet of the queue at the head of the queue, the step of determining, if the link capacity is sufficient to transmit the packet, might be implemented before the step of copying a reference of a memory cell, in which the packet being the first packet at the head of the queue is stored, or after the step of copying a reference of a memory cell, in which the packet being the first packet at the head of the queue is stored. In particular, only if the link capacity is sufficient to transmit the packet, a copy of a reference of the memory cell, in which the packet being the first packet at the head of the queue is stored, is made. In particular, only if the link capacity is determined to be sufficient to transmit the packet, a copy of the reference of the memory cell, in which the packet being the first packet at the head of the queue is stored, is made.

Further, the step of transmitting the packet being the first packet of the queue at the head of the queue might be implemented before, during and/or after the step(s) of testing, and preferably incrementing. Analogously, the step(s) of testing, and preferably incrementing, might be implemented before, during and/or after the step of transmitting.

In a preferred embodiment, the step of dropping the packet being the first packet at the head of the queue comprises incrementing the reference of the memory cell, in which the packet being the first packet at the head of the queue is stored, in particular without transmitting said packet.

In a preferred embodiment, the step, or preferably the process, of transmitting the packet being the first packet of the queue at a head of the queue is not interrupted by the step, or preferably the process, of dropping the packet being the first packet of the queue at a head of the queue, and reversely. This means if one of these steps, or preferably processes, is processed first, it is not interrupted by the respective other step, or preferably process, respectively.

In another preferred embodiment, the step of transmitting a packet being the first packet of the queue at the head of the queue is only implemented, if the queue delay does not exceed the first queue delay threshold. In other words, the packet is only transmitted, if both the link capacity is sufficient to transmit the packet and the queue delay does not exceed the first queue delay threshold. In particular, a prior dropping the packet prevents transmitting the packet. In other words preferably, a prior dropping the packet prevents an additional transmitting the packet. In a preferred embodiment, both the dropping process and the transmitting process are started, in particular by copying a reference of the packet. For example, the transmitting process determines that the link capacity is sufficient to transmit the packet. However, the dropping process determines that the queue delay exceeds the first queue delay threshold. Thus the dropping process drops the packet, in particular by incrementing the reference of the packet without transmitting the packet. The transmitting process determines that the dropping process has already incremented the reference, which means that the dropping process has been already implemented. Therefore, the transmitting process does not transmit the packet and further does not increment the reference of the packet. In another variant to this embodiment, the dropping process and the transmitting process each make a copy of the reference. The dropping process determines that the queue delay exceeds the queue delay threshold. The transmitting process determines that the transmission link capacity is sufficient to transmit the packet. Therefore, the transmitting process declares the packet as a packet to be transmitted. However, before the packet is actually transmitted, the dropping process declares the packet to be dropped and thus in the end the packet is actually dropped before being transmitted, thus not transmitted.

In a preferred embodiment, the step of transmitting a packet being the first packet of the queue at the head of the queue and the step of dropping a packet being the first packet of the queue at the head of the queue are executed by independent processes. In other words, in a preferred embodiment, the step of transmitting a packet being the first packet of the queue at the head of the queue and the step of dropping a packet being the first packet of the queue at the head of the queue are executed by processes, which are independent.

Again in other words, in a preferred embodiment, the process which executes the step of transmitting a packet being the first packet of the queue at the head of the queue and process which executes the step of dropping a packet being the first packet of the queue at the head of the queue are independent processes. Again in other words, in a preferred embodiment, the processes which execute the step of transmitting a packet being the first packet of the queue at the head of the queue and the step of dropping a packet being the first packet of the queue at the head of the queue are independent.

In a preferred embodiment, the steps of transmitting and/or dropping a packet being the first packet of the queue at the head of the queue is repeated for a next packet being a (next) first packet of the queue at the head of the queue for dequeuing. In other words, if and after a packet, at dequeuing, has been transmitted and/or dropped, the reference of said packet has been incremented and therefore indicates a packet following said transmitted and/or dropped packet. The packet which is now indicated is a packet of the queue, and which follows the transmitted and/or dropped packet, is termed a next packet and is now the first packet of the queue. On this (next) first packet which is now the first packet of the queue, the above described method of transmitting and/or dropping a packet being the first packet of the queue at the head of the queue is implemented. Thus, the method of transmitting and/or dropping a packet being the first packet of the queue at the head of the queue is repeated along the queue packet for packet, or on each consecutive packet at the head of the queue at dequeuing.

In a preferred embodiment, the method further comprises the step of dropping a packet arriving at the buffer for enqueuing at the tail of the queue, if a queue delay exceeds a second queue delay threshold lower than the first queue delay threshold.

In a preferred embodiment, the queue delay calculated for implementing the step of dropping a packet arriving at the buffer for enqueuing at the tail of the queue, is determined in regard of the same packet, on which the queue delay for the step of dropping the packet being the first packet of the queue at the head of the queue is calculated, which is preferably the packet being the first packet of the queue at the head of the queue. Alternatively, the queue delay for implementing the step of dropping a packet arriving at the buffer for enqueuing at the tail of the queue, is determined in regard of another predetermined packet. In particular, in case, if the steps of dropping a packet being the first packet of the queue at the head of the queue and of dropping a packet arriving at the buffer for enqueuing at the tail of the queue are not implemented contemporaneously, the packet in regard on which the queue delay is determined might not be the same packet. Nevertheless, preferably, the queue delay is calculated on the packet which is (at the moment of implementing the respective dropping step) the first packet at the head of the queue. Alternatively, another packet might be determined for calculating the queue delay.

In a preferred embodiment, a packet arriving at the buffer for enqueuing at the tail of the queue, which is not dropped, is put into the queue, namely at the tail of the queue. Preferably, the buffer comprises memory cells in which packets are stored and/or for storing packets. In case the packet is put into the queue, the packet is put into a memory cell at the tail of the queue. The memory cell in which the packet is put or stored into the queue at enqueuing, is indicated by a reference which addresses the memory cell in which the packet is put or stored for enqueuing. This reference is preferably an address of the memory cell, a pointer, a vector or a counter (number). The reference is in particular termed write pointer. The reference is further in particular termed write counter.

In a preferred embodiment, in case a packet arriving at the buffer for enqueuing at the tail of the queue is put into the queue, the packet is stored in the memory cell indicated by a reference indicating a memory cell at the tail of the queue. In case a packet arriving at the buffer for enqueuing at the tail of the queue is not put into the queue, it is dropped, e.g. by merely refraining from putting the packet into queue and/or by deleting the packet. In other words, in a preferred embodiment, the step of dropping a packet arriving at the buffer for enqueuing at the tail of the queue comprises not putting the packet arriving at the buffer for enqueuing at the tail of the queue into the queue. In a preferred embodiment, the step of dropping a packet arriving at the buffer for enqueuing at the tail of the queue comprises deleting the packet arriving at the buffer for enqueuing at the tail of the queue. In case a packet arriving at the buffer for enqueuing at the tail of the queue is put into the queue, the packet is stored in the memory cell indicated by the reference addressing the respective memory cell at the tail of the queue (e.g. write pointer). Then the reference is incremented so that the reference addresses a next memory cell at the tail of the queue where a next packet arriving at the buffer is stored, in case the next packet is actually put into the queue and not dropped.

In a preferred embodiment, the step of dropping a packet arriving at the buffer for enqueuing at the tail of the queue is repeated on one or more next packets arriving at the buffer for enqueuing at the tail of the queue.

In a preferred embodiment, after a packet arriving at the buffer for enqueuing at the tail of the queue is put into the queue or dropped, the method of dropping a packet arriving at the buffer for enqueuing at the tail of the queue is then implemented on a next packet arriving at the buffer for enqueuing at the tail of the queue, which is then either put into the queue or dropped (namely in particular, the next packet is dropped, if the queue delay exceeds the second queue delay threshold, and the packet is put into the queue, if the packet is not dropped). Thus, the method of dropping a packet arriving at the buffer for enqueuing at the tail of the queue is repeated along the packets arriving at the queue, packet for packet, or on each consecutive packet arriving at the buffer for enqueuing at the tail of the queue.

In a preferred embodiment, the step of transmitting a packet being the first packet of the queue at the head of the queue, the step of dropping a packet being the first packet of the queue at the head of the queue and the step of dropping a packet arriving at the buffer for enqueuing at the tail of the queue are executed by independent processes, i.e. by processes which are independent. This means, in a preferred embodiment, the process which executes the step of transmitting a packet being the first packet of the queue at the head of the queue, the process which executes the step of dropping a packet being the first packet of the queue at the head of the queue and the process which executes the step of dropping a packet arriving at the buffer for enqueuing at the tail of the queue are independent, or, in other words, are processes which are independent.

In particular, processes are independent, if the execution of one process of these processes is independent from the execution of one or more further processes of these processes, in particular if the execution of one process is not a condition for the execution of the one or more further processes.

Further, in preferred embodiments, during execution of one independent process, a result or intermediate result of one or more further processes of these processes, might be considered or not according to the implementation.

In detail, in a preferred embodiment, during execution of one independent process, a result or intermediate result of one or more further processes of these processes, is considered.

In detail, in a preferred embodiment, during execution of one independent process, a result or intermediate result of one or more further processes of these processes, is not considered.

For example, in preferred embodiments, the incrementing of the reference of a packet by one of the dropping process or the transmitting process, is considered by the respective other process.

For example in a preferred embodiment, the dropping process does not increment the reference, if the reference is already incremented by the transmitting process, as described in the corresponding embodiment. Thus, the feature "independent" in regard of independent process as defined in this invention refers to the matter, if the process is executed or not executed, while during execution, a result or intermediate result of another process might be considered (such as the incrementing of the reference).

Thus preferably, a process is independent, if the matter, if the process is executed at all, does not depend on the matter, if another process is executed at all or not. In contrast preferably, a process is defined herein as dependent, if said process is only executed, in case another process is also executed. However, as stated, preferably, the process of transmitting the packet being the first packet at the head of the queue and of dropping the packet being the first packet at the head of the queue are independent process. Further preferably, as stated above, the process which executes the step of transmitting a packet being the first packet of the queue at the head of the queue, the process which executes the step of dropping a packet being the first packet of the queue at the head of the queue and the process which executes the step of dropping a packet arriving at the buffer for enqueuing at the tail of the queue are independent processes.

In a preferred embodiment, the first queue delay threshold is set according to retransmission timeouts of one or more receivers, in particular of an end system or of a further buffer via which the transmission of the packet is continued to another further buffer or to an end system. An end system is a system at the end of a transmission path.

Preferably, an end system is a network node that generates or that consumes (e.g. receives) data packets but that does not further forward the packets to/from other nodes.

In a preferred embodiment, a receiver is an end system.

In a preferred embodiment, a receiver is a further buffer via which the transmission of the packet is continued to another further buffer or to an end system.

In particular, the one or more receivers of the packet expect the packet, i.e. expect receiving the packet, in particular the one or more receivers expect receiving the packet within an ordinary transmission time (period).

In a preferred embodiment, a retransmission timeout is a time period determined based on a, in particular ordinary, transmission time. The transmission time on which the retransmission timeout is based is in particular the time period needed to transmit the packet to the receiver (in particular end system) under ordinary circumstances, e.g. under normal operation, of a particular packet. Thus preferably, if the time period has expired, a receiver, in particular an end system, does not expect the particular packet anymore, and requests retransmitting said particular packet. Thus, in other words, after expiry of the retransmission timeout in regard of a particular packet, retransmission of said particular packet is requested.

In a preferred embodiment, the first queue delay threshold is determined based on the retransmission timeout of the expected end systems in the range of 300 - 1000 ms.

In a preferred embodiment, the first queue delay threshold is determined based on the retransmission timeout of the end systems expecting the packet in the range of 300 - 1000 ms.

In a preferred embodiment, the first queue delay threshold is determined based on the retransmission timeout in the range of 300 - 1000 ms.

In a preferred embodiment, the first queue delay threshold is set at a value of one of: 300, 400, 500, 600, 700, 800, 900, 1000, 2000 ms.

In a preferred embodiment, the second delay threshold is set at a value of a target filling of the queue in equilibrium state, where the target filling of the queue is the filling of the queue that keeps the transmission link always engaged.

In a preferred embodiment, the second delay threshold is set at a value that keeps the transmission link always engaged in equilibrium state of the queue.

In a preferred embodiment, the second delay threshold is set at a value of a filling of the queue in equilibrium state. In a preferred embodiment, the second delay threshold is set at a value of a filling of the queue in equilibrium state, in particular so that there are always packets in the queue for transmission, in particular wherein the queue fills preferably about 80 percent of the buffer or preferably between 60 - 90 percent of the buffer.

In a preferred embodiment, the second delay threshold is set at a value of one of: 5, 10, 15, 20 ms.

### Brief description of the figures

Preferred embodiments are now described in detail with reference to the following figures of which
- Fig. 1: depicts schematically steps of a method for queue management
- Fig. 2: depicts schematically steps of preferred embodiments of a method for queue management
- Fig. 3: depicts schematically further steps of preferred embodiments of a method for queue management

The preferred embodiments as described for illustrative reasons in detail below or in the above summary are not meant to be restrictive, but the scope of the invention is defined by the claims.

### Detailed description

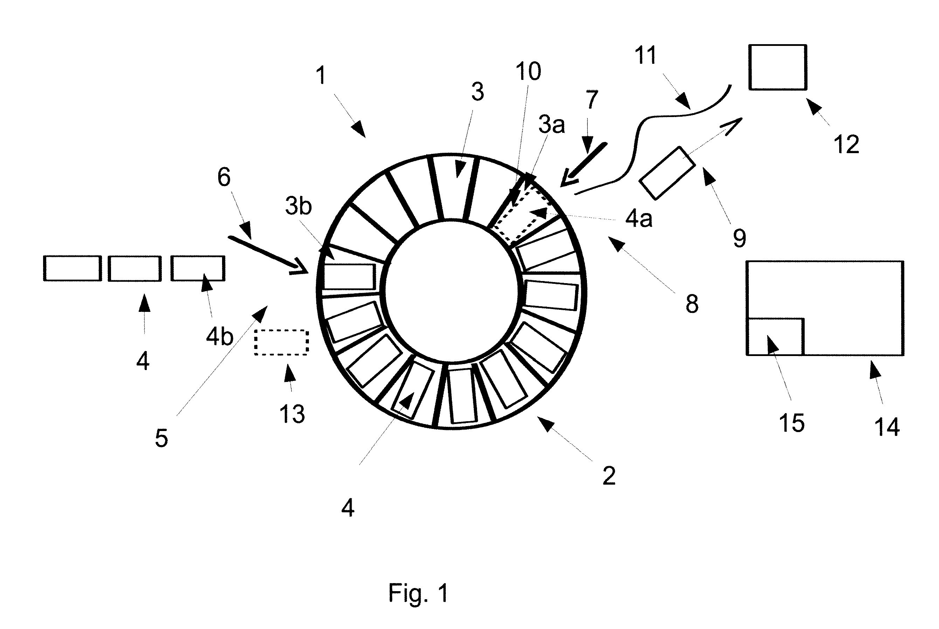

Figure 1 depicts a buffer 1 which is illustratively a ring buffer. A queue 2 is stored in the buffer 1. The buffer comprises a plurality of memory cells 3. The queue 2 comprises packets 4 which are stored in respective memory cells 3 of the buffer 2.

Figure 1 shows also packets 4 arriving at the buffer 1 for enqueuing 5.

A write pointer 6 indicates a memory cell 3 in which a packet 4 (here specified as packet 4b) arriving at the buffer 1 at the tail of the queue 2 for enqueuing 5 is stored, in case said arriving packet 4b is put into the queue 2 (i.e. is enqueued).

Further, figure 1 shows a read pointer 7 which indicates a packet 4 (here specified as packet 4a) being the first packet 4 at the head of the queue 2 at dequeuing 8. The memory cell 3 in which the packet 4a being the first packet 4 at the head of the queue 2 is stored, is specified in figure 1 as memory cell 3a. The packet 4a being the first packet 4 at the head of the queue 2 is transmitted 9, if a link capacity of a transmission link 11 is sufficient to transmit 9 the packet 4a, or dropped 10, if a queue delay exceeds a first queue delay threshold.

In a preferred embodiment, if a packet, e.g. packet 4a, is transmitted 9, the packet 4 is transmitted 9 over a transmission link 11, e.g. to receiver 12. The transmitting 9 of the packet 4 is symbolized in figure 1 by an arrow along the transmission link 11 in the direction of receiver 12.

Further, in a preferred embodiment, dropping 10 the packet 4a being the first packet 4 at the head of the queue 2 means incrementing the read pointer 7, in particular without transmitting 9 the packet 4a over the transmission link 11. In figure 1, dropping 10 packet 4a is indicated by broken lines in the memory cell 3a, where packet 4a is stored. In case the packet 4a is dropped, the packet 4a is preferably still stored in memory cell 3a, however without being transmitted 9. In other words, the broken lines symbolize that the packet 4a is not transmitted 9, but is dropped 10 by incrementing the reference (read pointer 7), without transmitting 9 the packet 4a. The packet 4a might therefore remain in memory cell 3a, but is not transmitted 9. The packet 4a might remain in memory cell 3a, until memory cell 3a is re-written by the write pointer 6.

According to a preferred embodiment, the step of transmitting 9 a packet 4a being a first packet 4 of a queue 2 at the head of the queue 2 is executed by a process which executes (in addition to the step of transmitting 9) also one or more further steps before and/or after the step of transmitting 9, wherein this process might be termed first process 9a and/or transmit process 9a.

Further, according to a preferred embodiment, the step of dropping 10 a packet 4a being a first packet 4 of a queue 2 at the head of the queue 2 is executed by a process which executes (in addition to the step of dropping 10) also one or more further steps before and/or after the step of dropping 10, wherein this process might be termed second process 10a and/or emergency drop process 10a.

In preferred embodiments, the step of transmitting 9 a packet 4a being the first packet 4 of the queue 2 at the head of the queue 2 and the step of dropping 10 a packet 4a being the first packet 4 of the queue 2 at the head of the queue 2 are executed by concurrent processes. The concurrent processes which execute the step of transmitting 9 and the step of dropping 10 are for example the above mentioned transmit process 9a and the emergency drop process 10a, respectively. Here, the transmit process 9a and the emergency drop process 10a share the read pointer 7 which is the reference of the memory cell 3a, in which the packet 4a being the first packet 4 of the queue 2 at the head of the queue 2 is stored, as a common resource. The read pointer 7 is the common resource shared by the transmit process 9a and the emergency drop process 10a, in particular, because both the transmit process 9a and the emergency drop process 10a make a copy of the read pointer 7, which is then used for further processing as described throughout the description.

In a preferred embodiment, the concurrent processes, here the transmit process 9a and the emergency drop process 10a execute, before the steps of transmitting 9 and/or dropping 10 the packet 4a being the first packet 4 of the queue 2 at a head of the queue 2, the steps of making a copy of the reference, which is here the read pointer 7, addressing the memory cell 3a, in which the packet 4a being the first packet 4 of the queue 2 at the head of the queue 2 is stored, and preferably reading at least the head of the packet 4a which is stored in the memory cell 3a indicated by the copy of the read pointer 7.

In a preferred embodiment, the concurrent processes, here the transmit process 9a and the emergency drop process 10a, execute, before, after or during the steps of transmitting 9 and/or dropping 10 the packet 4a being the first packet 4 of the queue 2 at the head of the queue 2, the steps of incrementing the read pointer 7, if the copy of the read pointer 7, is still identical to the read pointer 7.

In particular, in a preferred embodiment, the transmit process 9a executes, before, after or during the step of transmitting 9 the packet 4a being the first packet 4 of the queue 2 at the head of the queue 2 and stored in the memory cell 3a indicated by the read pointer 7, the step of incrementing the read pointer 7, if the copy of the read pointer 7 is still identical to the read pointer 7.

Further, in particular, in a preferred embodiment, the emergency drop process 10a, executes the step of incrementing the read pointer 7, if the copy of the read pointer 7, is still identical to the read pointer 7. In particular, the dropping 10 of the packet 4a is implemented by incrementing the read pointer 7 However, preferably, before incrementing the read pointer 7, the emergency drop process 10a tests if the read pointer 7 has already been incremented.

Preferably, the emergency drop process 10a increments the read pointer 7, only if the read pointer 7 has not yet been incremented. Thus, the incrementing of the read pointer 7 is done by the emergency drop process 10a, only if the copy of the read pointer 7 is still identical to the read pointer 7. This means, if the copy of the read pointer 7 is still identical to the read pointer 7, the read pointer 7 has not yet been incremented, in particular not by the transmitting process 10a. If the copy of the read pointer 7 is not identical to the read pointer 7 any more, the read pointer 7 has been already incremented, in particular by the transmitting process 10a. In this case, the emergency drop process 10a does not increment the read pointer 7 any more. If, in the latter case, the emergency drop process 10a incremented the read pointer 7, the read pointer would be incremented two times, namely by the transmit process 9a and by the emergency drop process 10a, so that the read pointer 7 would address the second next memory cell 3 to the memory cell 3a in which packet 4a has been stored, so that the method of transmitting 9 or dropping 10 a packet would be implemented on a packet 4 following the next packet 4 which follows packet 4a (instead of being implemented on a packet 4 following packet 4a).

Similarly, in a preferred embodiment, in case the read pointer 7 has been already incremented by the emergency drop process 10a, the transmit process 9a determines that the copy of the read pointer 7 is not any more identical to the read pointer 7 and does not increment the read pointer 7 any more. In the later case, if the link capacity of the transmission link 11 is sufficient to transmit 9 the packet 4a, the transmit process 9a might transmit 9 the packet 4a or not. In a preferred embodiment, the transmit process 9a as soon as the transmit process 9a has determined that the link capacity of the transmission link 11 is sufficient to transmit 9 packet 4a and the transmit process 9a has a copy of the read pointer 7 so that the transit process 9a has access to the packet 4a, the transmit process 9a transmits 9 the packet 4a. In a preferred embodiment, the transmit process 9a implements transmitting the packet 4a, if the link capacity is sufficient to transmit 9 the packet 4a, although the emergency drop process 10a implement dropping 10 the packet 4a by incrementing the read pointer 7 which indicates the memory cell 3a, in which packet 4a has been stored. In this case, the packet 4a is dropped 10 by the emergency drop process 10a in the sense that the read pointer 7 is incremented by the emergency drop process 10a, and also the packet is transmitted 9 by the transmit process 9a by implementing transmitting 9 the packet 4a.

In a preferred embodiment, in case the link capacity is sufficient to transmit the packet 4a, the transmit process 4a implement transmitting the packet 4a and then further the step of incrementing the read pointer 7, if the copy of the read pointer 7 is still identical to the read pointer 7. Further, if the dropping process 10a determines that the queue delay exceeds the first queue delay threshold, then the dropping process 10a cannot prevent transmitting the packet 4a, because the packet 4a has already been transmitted by the transmit process 9a. Further, preferably, the dropping process 10a tests, if the copy of the read pointer 7 is still identical to the read pointer 7. In case, the read pointer 7 has already been incremented by the transmit process 9a, what will be the case usually, after the transmitting process 9a has been transmitted the packet 4a and incremented the read pointer 7, the dropping process 9a does not increment the read pointer 7 any more.

In another embodiment, in case the queue delay exceeds the first queue delay threshold, the dropping process 10a implement dropping packet 4a by incrementing the copy of the read pointer 7. If then, the transmit process 9a determines that the link capacity of the transmission link 11 is sufficient to transmit 9 the packet 4a, the transmit process 9a cannot transmit packet 4a which has been dropped before by the dropping process 10a. Actually, after the packet 4a has been dropped 10 by incrementing the read pointer 7, the read pointer 7 points to a next packet 4 following packet 4a which has been dropped. Then the transmit process 9a makes a copy the read pointer 7 which points to the next packet following the dropped packet 4a. However, the transmit process 9a cannot access the dropped packet 4a any more, because the read pointer 7 points already to the next packet 4 following packet 4a. Therefore, the transmit process 9a cannot transmit the dropped packet 4a any more.

If in another embodiment, the transmit process 9a has already (before the read pointer 7 has been incremented by the dropping process 10a) made a copy of the read pointer 7 pointing at packet 4a which has been dropped by the dropping process 10a (by incrementing the read pointer 7), then the transmits process 9a might transmit 9 the packet 4a, if the link capacity is sufficient to transmit packet 4a.

In another preferred embodiment, the packet 4a is only transmitted 9, if both the link capacity of the transmission link 11 is sufficient to transmit 9 the packet 4a and if the queue delay does not exceed the first queue delay threshold. In a preferred embodiment, if the queue delay exceeds the first queue delay threshold, the emergency drop process 9a implements dropping 10 the packet 4a without the packet 4a being transmitted 9. In a preferred embodiment, the transmit process 9a only transmits the packet 4a, if both the transmit capacity of the transmission link 11 is sufficient to transmit 9 packet 4a and the queue delay does not exceed the first queue delay threshold. In this case, the transmit process 9a considers both the transmission capacity of the transmission link 11 as condition for transmitting 9 packet 4a, in particular to be sufficient to transmit 9 packet 4a, and the queue delay as condition for transmitting 9, in particular not to exceed the first queue delay threshold.

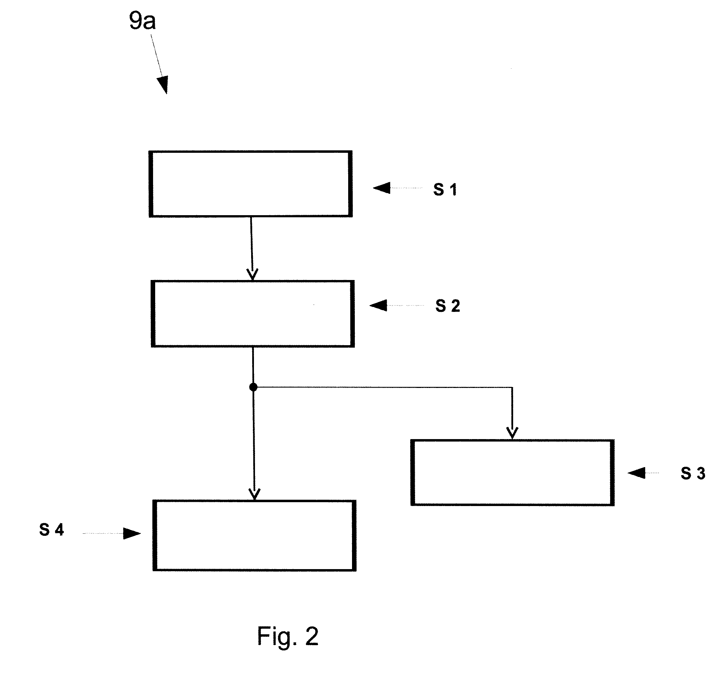

Figure 2 depicts illustratively the transmit process 9a as an exemplary implementation of a first process performing the step of transmitting 9 the packet 4a being the first packet 4 of the queue 2 at the head of the queue 2. The transmit process 9a executes the steps of determining that a link capacity of the transmission link 11 is sufficient to transmit 9 the packet 4a, copying a reference (the reference is here read pointer 7) of the memory cell 3a, in which the packet 4a being the first packet of the queue 2 at the head of the queue 2 is stored, reading at least a head of the packet 4a being the first packet 4 of the queue 2 at the head of the queue 2 and stored in the memory cell 3a indicated by the copy of the reference, transmitting 9 the packet 4a indicated by the copy of the reference over the transmission link 11, testing, if the copy of the reference is still identical to the reference and, if the copy of the reference is still identical to the reference, incrementing the reference. In detail, as depicted in figure 2, the transmit process starts at step S1. In step S1, it is determined that the link capacity of the transmission link 11 is sufficient to transmit 9 the packet 4a being the first packet 4 at the head of the queue 2 and, based on said determination of sufficient link capacity, the process proceeds to S2. In a variant implementation, in a first substep of S1 (not depicted in figure 2), it is determined, if the link capacity of the transmission link 11 is sufficient to transmit 9 the packet 4a being the first packet 4 at the head of the queue 2 and in a second substep of S1, only if the link capacity of the transmission link 11 is (determined to be) sufficient to transmit 9 the packet 4a being the first packet 4 at the head of the queue 2, the process proceeds to step S2. In S2, a copy of the read pointer 7 is made, wherein the read pointer 7 addresses the memory cell 3a, in which packet 4a is stored, and at least part of the packet 4a is read.

In a preferred embodiment, the pseudocode for implementing step S2 comprises at least the code fragment: "ptr = r_ptr" (wherein ptr denotes the copy of the read pointer 7 and r_ptr denotes the read pointer 7). By the transmit process 9a, preferably, the whole packet is read as a preparation to transmit 9 the packet. Then the transmit process 9a proceeds both to step S3 and step S4. At step S3, the packet 4a which is stored in the memory cell 3a which is indicated (addressed) by the copy of the read pointer 7, is transmitted 9. In a preferred embodiment, the pseudocode for implementing step S3 comprises at least the code fragment: "transmit packet at ptr"). In step S4, it is tested, if the copy of the read pointer 7 is still identical to the read pointer 7 and, if the copy of the read pointer 7 is still identical to the read pointer 7, the read pointer 7 is incremented. In a preferred embodiment, the pseudocode for implementing step S4 comprises at least the code fragment: "if (r_ptr == ptr) then r_ptr = r_ptr + 1". In a preferred embodiment, the transmit process 9a stops after steps S3 and S4 (i.e. after implementing both S3 and S4). In another preferred embodiment, the transmit process 9a proceeds with S1. In other words, in this case, the transmit process 9a is repeated on a next packet 4 following packet 4a at the head of the queue 2 and further preferably, packet 4 by packet 4 along the head of the queue 2. In a preferred embodiment, the transmit process 9a restarts at S1 by determining, if the link capacity of the transmission link 11 is sufficient to transmit 9 the packet 4a being the first packet 4 at the head of the queue 2 and in case of the affirmative proceeds to step S2 and so on as described above.

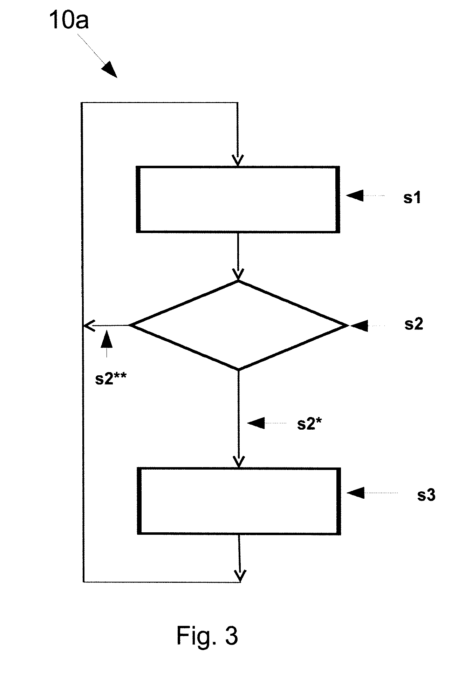

Figure 3 depicts illustratively the emergency drop process 10a as an exemplary implementation of a second process performing the step of dropping 10 the packet 4a being the first packet 4 of the queue 2 at the head of the queue 2. The emergency drop process 10a executes the step of copying a reference (the reference is here read pointer 7) of the memory cell 3a, in which packet 4a being the first packet 4 of the queue 2 at a head of the queue 2 is stored, reading at least the head of the packet 4a, which is stored in the memory cell 3a indicated by the copy of the reference, determining that the queue delay of the packet 4a being the first packet of the queue 2 at the head of the queue 2 exceeds the first queue delay threshold, testing, if the copy of the reference is still identical to the reference and, if the copy of the reference is still identical to the reference, dropping 10 the packet 4a by incrementing the reference. In detail, the emergency drop process 10a starts a step s1 which is the step of making a copy of the read pointer 7 which addresses the memory cell 3a, in which the packet 4a is stored. In a preferred embodiment, the pseudocode for implementing s1 comprises at least the code fragment: "ptr = r_ptr", wherein ptr denotes the copy of the read pointer 7 and r_ptr denotes the read pointer 7. The process proceeds to step s2. In step s2, it is determined, if the queue delay exceeds the first queue delay threshold. If the queue delay does not exceed the first queue delay threshold, the process goes back to step s1, as indicated by reference sign s2*. If the queue delay exceeds the first queue delay threshold, the process proceeds to step s3, as indicated by reference sign s2**. In a preferred embodiment, the pseudocode for implementing step s2 comprises at least the code fragment: "Packet at ptr too old?" or at least the code fragment: "queue delay > first queue delay threshold?". At step s3, it is tested, if the copy of the read pointer 7 is still identical to the read pointer 7 and, if the copy of the read pointer 7 is still identical to the read pointer 7, the read pointer 7 is incremented. In a preferred embodiment, the pseudocode for implementing step s3 comprises at least the code fragment: "if (r_ptr == ptr) then r_ptr = r_ptr + 1". In a preferred embodiment, after step s3, the emergency drop process 10a restarts at step s1. In a preferred embodiment, the emergency drop process 10a is repeated on a next packet 4 following packet 4a at the head of the queue 2 and further preferably, packet 4 by packet 4 along the head of the queue 2.

Preferably, by the testing step, namely by testing, if the copy of the read pointer 7 is still identical to the read pointer 7, implemented by the transmit process 9a and the emergency drop process 10a, it is prevented that the read pointer 7 is incremented two times, namely by each of the transmit process 9a and the emergency drop process 10a. E.g. if the read pointer 7 is already incremented by the transmit process 9a, the emergency drop process 10a determines that the copy of the read pointer 7 is not identical to the read pointer 7 any more, apparently because the transmit process 9a has already incremented the read pointer 7, and therefore the emergency drop process 10a does not incremented the read pointer 7 (again). Similarly, if the read pointer 7 is already incremented by the emergency drop process 10a, the transmit process 9a determines that the copy of the read pointer 7 is not identical to the read pointer 7 any more, apparently because the emergency drop process 10a has already incremented the read pointer 7, and therefore the transmit process 9a does not increment the read pointer 7 (again). By this it is avoided, that the read pointer 7 (after packet 4a has been transmitted or dropped) is incremented two times and indicates a second next memory cell 3 after the memory cell 3a, in which packet 4a has been stored) instead of a immediately next memory cell 3 after the memory cell 3a. If the read pointer 7 were incremented two times, the packet 4 following immediately after packet 4a would not be processed by the transmit process 9a and/or the emergency drop process 10a, but in particular would be dropped 10 without any further determination of dropping 10 and/or transmitting 9 conditions. Actually the immediately next packet 4 would be dropped 10, because the read pointer 7 incremented two times would "skip" and thereby neglect the memory cell 3 in which the packet 4 following immediately after packet 4a is stored and therefore would "skip" and thereby neglect the immediately next packet 4 (following immediately after packet 4). In particular, the immediately next packet 4 would be neglected in the later case, because neither the dropping process 10a nor the transmit process 9 would be implemented on said immediately next packet 4 in the later case.

Preferably, the step of testing, if the copy of read pointer 7 is still identical to the read pointer 7, and the step of incrementing the read pointer 7, if the copy of the read pointer 7 is still identical to the read pointer 7, are implemented as atomic operation.

Preferably, the testing, if the copy of read pointer 7 is still identical to the read pointer 7, and the incrementing the read pointer 7, if the copy of the read pointer 7 is still identical to the read pointer 7, are implemented as atomic operation.

Atomic operations are in particular operations, which are implemented so fast that these operations seem to be implemented (almost) instantaneously. Atomic operations are implemented e.g. within only a few (e.g. 10, 20, or 30) machine cycles of the machine (i.e. processor), e.g. of the control unit 15, which executes these operations.

Atomic operations are in particular operations that cannot be subdivided into partial operations that can be distinguished by other concurrent processes. In other words, atomic operations are in particular operations, that cannot be subdivided into partial operations distinguishable by other concurrent processes. Atomic operations are typically executed in one or few clock cycles, in particular in 5, 10 or 20 clock cycles.

In particular, in a preferred embodiment, there are two processes such as the transmit process 9a and the emergency drop process 10a of which one or more steps are implemented as atomic operations, or preferably, as a (single / one) atomic operation.

In particular, the step of making a copy of the read pointer 7 and the step of testing, if the copy of the read pointer 7 is still identical to the read pointer 7, and the step of incrementing the read pointer 7, if the copy of the read pointer 7 is still identical to the read pointer 7, of the transmit process 9a are implemented as atomic operations, or preferably, as atomic operation.

In particular, the step of making a copy of the read pointer 7 of the transmit process 9a is implemented as atomic operation.

In particular, the step of testing, if the copy of the read pointer 7 is still identical to the read pointer 7, and the step of incrementing the read pointer 7, if the copy of the read pointer 7 is still identical to the read pointer 7, of the transmit process 9a are implemented as atomic operation.

In particular, the step of making a copy of the read pointer 7 and the step of testing, if the copy of the read pointer 7 is still identical to the read pointer 7, and the step of incrementing the read pointer 7, if the copy of the read pointer 7 is still identical to the read pointer 7, of the emergency drop process 10a are implemented as atomic operations, or preferably, as atomic operation.

In particular, the step of making a copy of the read pointer 7 of the emergency drop process 10a is implemented as atomic operation.

In particular, the step of testing, if the copy of the read pointer 7 is still identical to the read pointer 7, and the step of incrementing the read pointer 7, if the copy of the read pointer 7 is still identical to the read pointer 7, of the emergency drop process 10a are implemented as atomic operation.

In particular, the step of making a copy of the read pointer 7, and the step of testing, if the copy of the read pointer 7 is still identical to the read pointer 7, and the step of incrementing the read pointer 7, if the copy of the read pointer 7 is still identical to the read pointer 7, of the transmit process 9a appear to be implemented (almost) instantaneously to the emergency drop process 10a.

Similarly, the step of making a copy of the read pointer 7, and the step of testing, if the copy of the read pointer 7 is still identical to the read pointer 7, and the step of incrementing the read pointer 7, if the copy of the read pointer 7 is still identical to the read pointer 7, of the emergency drop process 10a appear to be implemented (almost) instantaneously to the transmit process 9a.

Further, in particular, the transmit process 9a and the emergency drop process 10a are concurrent processes as the share the read pointer 7 as a common resource. Further, preferably, one or more of the steps of the transmit process 9a and one or more of the steps of the emergency drop process 10a are implemented as atomic operation(s). Therefore, in a preferred embodiment, the prior processing of the transmitting step 9 of the transmit process 9a prevents processing of the dropping step 10 of the emergency drop process 10a, in particular the additional, contemporaneous and/ simultaneous processing of the dropping step 10 on the same packet 4a. Similarly, the prior processing of the dropping step 10 of the emergency drop process 10a prevents processing of the transmitting step 9 of the transmit process 9a, in particular the additional, contemporaneous and/ simultaneous processing of the transmitting step 9 on the same packet 4a.

In preferred embodiments, one or more of the steps of the method, in particular one or more of the steps implemented by the first process 9a/ transmit process 9a might be implemented in different order and/or omitted. For example, the determination, if the link capacity of the transmission link 11 is sufficient to transmit a packet 4a being the first packet of a queue 2 at a head of the queue 2 is stored, might be processed before or after making a copy of a reference indicating the memory cell 3, in which the packet 4a being the first packet of a queue 2 at a head of the queue 2 is stored. Preferably, only if the link capacity of the transmission link 11 is sufficient to transmit 9 the packet 4a, a copy of the reference of the memory cell 3a, in which packet 4a is stored, is made and the further steps of the first process 9a are implemented.

In a preferred embodiment, a prior processing of one of the steps of transmitting 9 and dropping 10 the packet 4a being the first packet of the queue 2 at a head of the queue 2 prevents a simultaneous processing of the respective other step of transmitting 9 or dropping 10 the packet 4a being the first packet of the queue 2 at a head of the queue 2. This means preferably, that in case the packet 4a is transmitted by the transmitting step 9, the same packet 4a is not dropped by the dropping step 10. Similarly, a packet 4a which is dropped by the dropping step 9 is not any more transmitted by the transmitting step 9.

In preferred embodiments, if both the link capacity of the transmission link 11 is (determined to be) sufficient to transmit the packet 4a and the queue delay exceeds the first queue delay threshold, in other words if the conditions for both the transmitting step 9 and the dropping step 10 are given, the one step out of the transmitting step 9 and the dropping step 10 is implemented which is firstly processed, in particular which is firstly processed by a respective at least one control unit 15.

In preferred embodiment, at least one control unit 15 is adapted to implement the transmitting step 9 and the dropping step 10, respectively (and/or the respective transmit process 9a and emergency drop process 10a, respectively).

In a preferred embodiment, one control unit 15 is adapted to implement the transmitting step 9 (and/or the transmit process 9a).

In a preferred embodiment, one control unit 15 is adapted to implement the dropping step 10 (and/or the emergency drop process 10a).

In a preferred embodiment, at least one control unit 15 implements the transmitting step 9 and the dropping step 10 (and/or the respective transmit process 9a and emergency drop process 10a).

In a preferred embodiment, a first control unit 15 (which comprises a first processor) implements the transmitting step 9 (and/or the respective transmit process 9a) and a second control unit 15 (which comprises a second processor) implements the dropping step 10 (and/or the respective emergency drop process 10a), wherein this implementation might be termed hardware based solution, as the transmitting step 9 (/transmit process 9a) and the dropping step 10 (/emergency drop process 10a) are each implemented by a respective control unit 15 (comprising a respective processor) out of two control units 15. This implementation might also be referred to as multiprocessor-system-based solution and/or might be referred to as parallel processing. In a variant to this preferred embodiment, a control unit 15 comprises a first processor and a second processor, and the first processor of the control unit 15 implements the transmitting step 9 (and/or the respective transmit process 9a) and the second processor of the control unit 15 implements the dropping step 10 (and/or the respective emergency drop process 10a).

In another preferred embodiment, the transmitting step 9 (and/or the respective transmit process 9a) and the dropping step 10 (and/or the respective emergency drop process 10a) are implemented by only one processor, in particular by only one processor of a control unit 15, in particular by a control unit 15 which comprises only one processor. This implementation might be termed software-based solution on a one-processor-system.

In particular, it is noted that in preferred embodiments, each implementation makes use of hardware, and preferably of software.

In another embodiment, a packet 4a being the first packet 4 at the head of a queue 2 which is determined to be transmitted 9 by the step of transmitting 9 or corresponding transmit process 9a might nevertheless be dropped 10 by the step of dropping 10 or corresponding dropping process 10a, in particular in case the step or dropping 10 and/or the dropping process 10a has a priority. In the later case, even if the packet 4a could be transmitted 9, e.g. via the transmission link 11 to the receiver 12, because the transmission capacity of the transmission link 11 is sufficient to transmit 9 the packet 4a, the packet 4a is nevertheless dropped, if the queue delay exceeds the first queue delay threshold. Preferably, the packet 4a is only transmitted 9, if the link capacity is determined to be sufficient to transmit 9 the packet and the queue delay does not exceed the first queue delay threshold.

As already mentioned above, figure 1 also illustrates the step of dropping 10 a packet 4 arriving at the buffer 1 for enqueuing 5 at the tail of the queue 2. A write pointer 6 indicates a memory cell 3 (here specified as memory cell 3b) in which a packet 4 (here specified as packet 4b) arriving at the buffer 1 at the tail of the queue 2 for enqueuing 5 is stored, in case said arriving packet 4b is put into the queue or is enqueued, i.e. stored in the queue 2, and not dropped before being enqueued. The dropping of a packet 4b arriving at the buffer 1 at the tail of the queue 2 for enqueuing 5 is specified by reference sign 13. Thus, it is noted that dropping 10 refers to the dropping of a packet 4a at the head of the queue 2 at dequeuing 8. In contrast, dropping 13 refers to the dropping of a packet 4b arriving at the buffer 1, wherein the packet 4b arrives at the buffer 1 for enqueuing 5, but eventually is not enqueued, but instead dropped 13.

In particular, a packet 4b arriving at the buffer 1 for enqueuing 5 at the tail of the queue 2 is dropped 13, if the queue delay exceeds a second queue delay threshold lower than the first queue delay threshold. If a packet 4b arriving at the buffer 1 at the tail of the queue 2 is not dropped 13, said packet 4b is stored into the queue 2, namely in the memory cell 3 indicated by the write pointer 6. In Figure 1, as already noted, this memory cell 3 is specified as memory cell 3b. In this case, the write pointer 6 is incremented and addresses a next memory cell 3 at the tail of the queue 2, where a next arriving packet 4 is stored, if not dropped 13.

Further, a network element 14 is provided, which comprises at least one control unit 15. The network element 14 might comprise also the buffer 1. Alternatively, the network element 14 and the buffer 1 are implemented as separate devices (see figure 1) and the network element 14 is connected (in particular via a circuit or circuit lines which are not depicted in figure 1 so as not to overload figure 1) with the buffer 1 for implementing the method of queue management.

The network element 14, in particular by means of the at least one control unit 15, and/or the at least one control unit 15 are adapted to implement one or more or all of the steps of the method for queue management, in particular to transmit 9 a packet 4a being a first packet 4 of a queue 2 at a head of the queue 2 stored in a buffer 1 at dequeuing 8, if a link capacity of a transmission link 11 is sufficient to transmit 9 the packet 4a, and/or to drop 10 a packet 4a being a first packet 4 of the queue 2 at the head of the queue 2 at dequeuing 8, if the queue delay exceeds a first queue delay threshold.

The at least one control unit 15 may be implemented as a single unit, a strand-alone device, or within a database, integrated in a computer and/or within a computer network. The at least one control unit 15 may be implemented through the use of hardware, software and/or hardware capable of executing software in association with appropriate software.

More specifically, the at least one control unit 15 can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of the at least one control unit 15 may be implemented as processing blocks in a software program. Such software may be employed in a digital signal processor, microcontroller, or general-purpose computer implemented as a single device or integrated in a computer network.

The at least one control unit 15 may comprise program code embodied in tangible media, such as magnetic recording media, optical recording media, solid state memory, floppy diskettes, CD-ROMs, hard drives, or any other machine-readable storage medium, wherein, when the program code is loaded into and executed in the at least one control unit 15, the at least one control unit 15 becomes an apparatus used for practicing the invention.

The inventions has in particular the advantage that queue management for avoiding buffer overflow under normal operations is implemented at the tail of the queue at enqueuing, while queue management for reducing excessive queue or buffer overflow in emergency situations such as abrupt reduction of link capacity is provided at the head of the queue at dequeuing, where preferably as concurrent processes, a transmit process and an emergency drop process control the processing of packets at the head of the queue by either transmitting and/or dropping the packets. By this concept of diversification of queue management under normal operation conditions at the tail of the queue and emergency queue management under excessive overload conditions at the head of the queue, which finds no equivalent in the prior art, the queue management of the invention is in particular effective, improves over the prior art and thus provides an inventive advantage over commonly known concepts presented by the prior art.

## Claims

1. A Method for queue management, wherein the method comprises the steps of:
- transmitting (9) a packet (4a) being a first packet (4) of a queue (2) at a head of the queue (2) stored in a buffer (1) at dequeuing (8), if a link capacity of a transmission link (11) is sufficient to transmit (9) the packet (4a); and/or
- dropping (10) a packet (4a) being a first packet (4) of the queue (2) at the head of the queue (2) at dequeuing (8), if a queue delay exceeds a first queue delay threshold.

2. The method according to claim 1, wherein the step of transmitting (9) and the step of dropping (10) are executed by independent processes.

3. The method according to claim 1, wherein the method further comprises the step of:
- dropping (13) a packet (4b) arriving at the buffer (2) for enqueuing (5) at the tail of the queue (2), if a queue delay exceeds a second queue delay threshold lower than the first queue delay threshold.

4. The method according to claim 1, wherein a prior processing of one of the steps of transmitting (9) and dropping (10) the packet (4a) being the first packet (4) of the queue (2) at a head of the queue (2) prevents a simultaneous processing of the respective other step of the steps of transmitting (9) and dropping (10) the packet (4a) being the first packet (4) of the queue (2) at a head of the queue (2).

5. The method according to claim 1, wherein the steps of transmitting (9) the packet (4a) and/or dropping (10) the packet (4a) being the first packet (4) of the queue (2) at the head of the queue (2) are executed by concurrent processes, wherein a reference (7) of a memory cell (3a), in which the packet (4a) being the first packet (4) of the queue (2) at the head of the queue (2) is stored, is shared as a common resource, wherein the reference (7) of the memory cell (3a) is in particular one of an address, a pointer, a vector and a counter number indicating the memory cell (3a).

6. The method according to claim 5, wherein the concurrent processes execute, before the steps of transmitting (9) and/or dropping (10) the packet (4a) being the first packet (4) of the queue (2) at a head of the queue (2), the steps of:
- making a copy of the reference (7) of the memory cell (3a), in which the packet (4a) being the first packet (4) of the queue (2) at the head of the queue (2) is stored;
- reading at least the head of the packet (4a) stored in the memory cell (3a) indicated by the copy of the reference (7).

7. The method according to claim 6, wherein the concurrent process which executes the step of transmitting (9) the packet (4a) being the first packet (4) of the queue (2) at the head of the queue (2) and stored in the memory cell (3a) indicated by the copy of the reference (7), executes the steps of:
- testing, if the copy of the reference (7) is still identical to the reference (7); and
- incrementing the reference (7) of the memory cell (3a), if the copy of the reference (7) is still identical to the reference (7),
wherein the step of transmitting (9) is executed before, during and/or after the steps of testing and incrementing.

8. The method according to claim 6, wherein the concurrent process which executes the step of dropping (10) the packet (4a) being the first packet (4) of the queue (2) at the head of the queue (2) and stored in the memory cell (3a) indicated by the copy of the reference (7), executes the steps of:
- testing, if the copy of the reference (7) is still identical to the reference (7); and
- dropping the packet (4a) by incrementing the reference (7) of the memory cell (3a), if the copy of the reference (7) is still identical to the reference (7).

9. The method according to claims 7 and/or 8, wherein the step of making a copy of the reference (7) is implemented as atomic operation and wherein the step of testing and the step of incrementing are implemented as atomic operation.

10. The method according to claim 1, wherein the buffer (1) is implemented as a ring buffer and/or wherein the queue (2) is implemented as a linked list.

11. The method according to claim 1, wherein a first process (9a) performing the step of transmitting (9) the packet (4a) being the first packet (4) of the queue (2) at the head of the queue (2) executes the steps of:
- determining that a link capacity of the transmission link (11) is sufficient to transmit (9) the packet (4a) being the first packet (4) of the queue (2) at the head of the queue (2);
- copying a reference (7) of a memory cell (3a), in which the packet (4a) being the first packet (4) of the queue (2) at the head of the queue (2) is stored;
- reading at least a head of the packet (4a) being the first packet (4) of the queue (2) at the head of the queue (2) and stored in the memory cell (3a) indicated by the copy of the reference (7);
- transmitting (9) the packet (4a) being the first packet (4) of the queue (2) at the head of the queue (2) and stored in the memory cell (3a) indicated by the copy of the reference (7) over the transmission link (11);
- testing, if the copy of the reference (7) is still identical to the reference (7); and
- if the copy of the reference (7) is still identical to the reference (7), incrementing the reference (7).

12. The method according to claim 1, wherein a second process (10a) performing the step of dropping (10) the packet (4a) being the first packet (4) of the queue (2) at the head of the queue (2) executes the steps of:
- copying a reference (7) of a memory cell (3a), in which the packet (4a) being the first packet (4) of the queue (2) at a head of the queue (2) is stored;
- reading at least the head of the packet (4a) being the first packet (4) of the queue (2) at the head of the queue (2) and stored in the memory cell (3a) indicated by the copy of the reference (7);
- determining that the queue delay exceeds the first queue delay threshold;
- testing, if the copy of the reference (7) is still identical to the reference (7); and
- if the copy of the reference (7) is still identical to the reference (7), dropping the packet (4a) by incrementing the reference (7).

13. The method according to claim 1, wherein the first queue delay threshold is set according to retransmission timeouts of end systems (12).

14. A network element (14) of a communication network, the network element (14) comprising at least one control unit (15), the at least one control unit (15) being adapted to transmit (9) a packet (4a) being a first packet (4) of a queue (2) at a head of the queue (2) stored in a buffer (1) at dequeuing (8), if a link capacity of a transmission link (11) is sufficient to transmit (9) the packet (4a), and/or to drop (10) a packet (4a) being a first packet (4) of the queue (2) at the head of the queue (2) at dequeuing (8), if a queue delay exceeds a first queue delay threshold.

15. A software product, adapted to execute the method according to claims 1 to 13, when executed by a computer.
